# EUROPEAN PATENT APPLICATION

(11) **EP 4 162 792 A1**
(43) Date of publication of application: **12.04.2023**
(21) Application number: 21201151.4
(22) Date of filing: 06.10.2021
(51) Int. Cl.: A01G 27/02, A01G 31/02, A01G 22/25, A01G 27/00

(54) **HYDROPONIC APPARATUS**

(71) Applicant: FinlandWasabi Oy, 49290 Vastila (FI)
(72) Inventor: LEE, Jae-Wung, 49290 Vastila (FI); LIM, Sunah, 49290 Vastila (FI)
(74) Representative: Laine IP Oy

(57) **Abstract**

According to an example aspect of the present invention, there is provided a hydroponic apparatus comprising an outer container (10) comprising an upper portion (11) and a lower portion (12) in a height direction of the apparatus (100), which lower portion (12) is configured to receive an irrigation liquid (42), an inner container (20) in the upper portion (11) of the outer container (10) for receiving a plant and the irrigation liquid (42), an irrigation system for irrigating the plant with the irrigation liquid (42), which irrigation system comprises a conduit (41) for transferring irrigation liquid (42) to the inner container (20), and at least one aperture (26, 27) between the upper portion (11) and the lower portion (12) for transferring excess irrigation liquid from the upper portion (11) to the lower portion (12).

## Description

### FIELD

The present invention relates to apparatuses for growing of plants, particularly the present invention relates to hydroponic apparatuses.

### BACKGROUND

A hydroponic apparatus is an apparatus for growing plants in water containing nutrients. Instead of soil, the roots of the plants are supported by a support media, such as peat moss, clay pellets, perlite or rockwool. Typically, the hydroponic apparatus comprises two separate containers: an upper container for the plants and a lower container for a nutrient liquid. The nutrient liquid is transferred from the lower container to the upper container for example, by a drip, wick or flood irrigation system.

The hydroponic apparatus provides a water and nutrient supply to plants. However, during plant cultivation, the temperature may become too high. Due to this, enzymes controlling growth of the plant are deactivated and dissolved oxygen level is dropped. The, the plant go dormant and stop growing, or may even die. Therefore, there is a need for improving hydroponic apparatuses.

### SUMMARY OF THE INVENTION

The object of the present invention is to provide a hydroponic apparatus, which provides a high dissolved oxygen level in a nutrient liquid and a growing temperature control.

According to a first aspect of the present invention, there is provided a hydroponic apparatus comprising an outer container comprising an upper portion and a lower portion in a height direction of the apparatus, which lower portion is configured to receive an irrigation liquid, an inner container in the upper portion of the outer container for receiving a plant and the irrigation liquid, which inner container has a solid base comprises a plurality of slits for air ventilation, and at least one perforation for removing an excess of the irrigation liquid from the inner container, which inner container has a smaller outer diameter than an inner diameter of the outer container thus forming an air space between the outer container and the inner container, an irrigation system for irrigating the plant with the irrigation liquid, which irrigation system comprises a conduit for transferring irrigation liquid to the inner container, and at least one aperture between the upper portion and the lower portion for transferring excess irrigation liquid from the upper portion to the lower portion.

According to a second aspect of the present invention, the hydroponic apparatus is used for growing plants, especially wasabi japonica.

### BRIEF DESCRIPTION OF THE DRAWINGS

FIGURE 1 illustrates a hydroponic apparatus in accordance with at least some embodiments of the present invention;
FIGURE 2 illustrates a hydroponic apparatus comprising a bottom structure in accordance with at least some embodiments of the present invention;
FIGURE 3 illustrates a hydroponic apparatus comprising a stand in accordance with at least some embodiments of the present invention;
FIGURE 4 illustrates a hydroponic apparatus comprising means for creating airflow through the inner container in accordance with at least some embodiments of the present invention;
FIGURE 5 illustrates a hydroponic apparatus comprising means for creating airflow through the inner container and a cooling means in an air space for cooling the apparatus in accordance with at least some embodiments of the present invention; and
FIGURE 6 illustrates a hydroponic apparatus comprising a lighting means in accordance with at least some embodiments of the present invention.

### EMBODIMENTS

In the present context, the term "height direction of apparatus" refers to a direction in which a plant substantially extends when the plant is growing in the apparatus.

In the present context, the term "wall" refers to a part of an inner container or an outer container, which separates contents of the inner container or the outer container from its surroundings in the height direction of apparatus.

Generally used hydroponic apparatuses provide a water and nutrient supply to plants. However, temperature control and oxygen level adjustment of a nutrient liquid can be difficult or even impossible with the generally used apparatuses. Therefore, a cultivation of demanding plants, such as wasabi japonica, is difficult or even impossible with the generally used apparatuses. At least some of the present embodiments provide solution to above-mentioned problems.

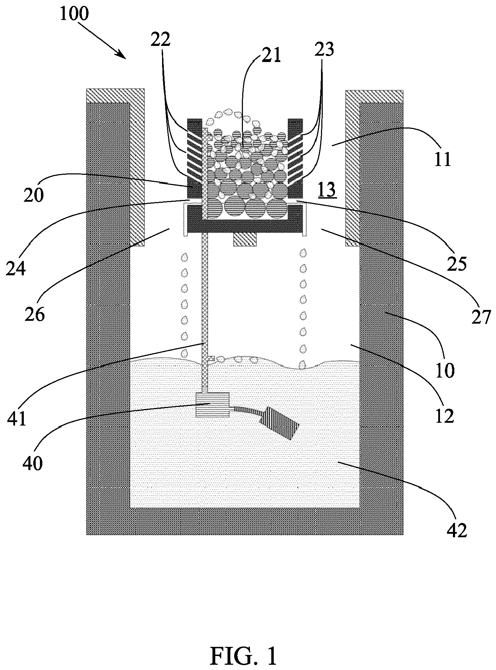

FIGURE 1 illustrates a hydroponic apparatus in accordance with at least some embodiments. The hydroponic apparatus 100 comprises an outer container 10 comprising an upper portion 11 and a lower portion 12 in a height direction of the apparatus 100. The lower portion 12 is configured to receive an irrigation liquid 42. The apparatus 100 further comprises an inner container 20 in the upper portion 11 of the outer container 10 for receiving a plant and the irrigation liquid 42. The inner container 20 has a solid base. The inner container 20 comprises a plurality of slits 22, 23 for air ventilation, and at least one perforation 24, 25 for removing an excess of the irrigation liquid from the inner container 20. The slits and perforation(s) are arranged on the sidewall of the inner container, the slits preferably above the perforation(s). The inner container 20 has a smaller outer diameter than an inner diameter of the outer container 10 thus forming an air space 13 between the outer container 10 and the inner container 20. The air space 13 ensures airflow between the outer container 10 and the inner container 20 and an excess irrigation liquid flow from the inner container 20. The apparatus 100 further comprises an irrigation system for irrigating the plant with the irrigation liquid 42. The irrigation system comprises a conduit 41 for transferring irrigation liquid 42 to the inner container 20. In addition, the apparatus 100 comprises at least one aperture 26, 27 between the upper portion 11 and the lower portion 12 for transferring excess irrigation liquid from the upper portion 11 to the lower portion 12. Thus, the excess irrigation liquid flowing from the inner container 20 can flow to the lower portion 12 through the at least one aperture 26, 27. The apparatus thus provides a controlled water and nutrient supply to plants, via the use of the slits, perforations and apertures allowing air and irrigation liquid circulation. In addition, the apparatus provides a temperature control by the airflow between the outer container and the inner container and the irrigation liquid flow to the inner container, which ensures activation of enzymes that control growth of the plant and high dissolved oxygen content in the irrigation liquid. This increases the growth rate and overall productivity of the plants by reducing the risk of increased temperatures, which affect the enzymes and reduce the amount of dissolved oxygen in the irrigation liquid. The apparatus enables of growing plants, which have specific demands for their growing conditions.

The inner container comprises a support media 21 for supporting roots of the plant. The support media can be for example, peat moss, clay pellets, perlite or rockwool.

The inner container 20 is configured for receiving at least one plant. However, a plurality of plants can be grown in the same inner container 20 simultaneously.

Preferably, the apparatus comprises one inner container.

However, the apparatus can comprise more than one inner container, such as 2 to 10 inner containers. Thus, different plants can be grown in different inner containers.

The inner containers can be attached to each other. Preferably, the inner containers are at a distance from each other. Then, an air space is formed between the inner containers and between the inner containers and the outer container.

A height of the upper portion 11 is so great that the inner container 20 can fit completely inside the upper portion 11. Thus, the air space can be formed over the entire height of the inner container by reducing the risk of increased temperatures, which affect the enzymes and reduce the amount of dissolved oxygen in the irrigation liquid.

The height of the upper portion 11 can be 30-50% from a height of the apparatus 100. A height of the lower portion 12 can be 50-70% from the height of the apparatus 100. Thus, a sufficiently large volume of the irrigation liquid can be placed in the lower portion relative to a volume of the plants in the upper portion.

A cross-section of the outer container 10 and the inner container 20 can be rectangular, round or any suitable shape such as oval. The outer container 10 and the inner container 20 can have the same cross-section. The outer container 10 and the inner container 20 can be concentric. An outer diameter of the inner container 20 can be 30-90 % of an inner diameter of the outer container 10. This ensures sufficiently wide air space between the outer container 10 and the inner container 20 by providing efficient airflow. This reduces the risk of increased temperatures, which affect the enzymes and reduce the amount of dissolved oxygen in the irrigation liquid.

According to an embodiment, the inner container 20 comprises an upwardly facing opening for the plant. The opening allows the plants to be placed in and removed from the inner container 20. In addition, air, light or extra nutrients can be guided through the opening into the inner container 20.

In addition, the outer container 10 can comprise an upwardly facing opening.

The plurality of slits 22, 23 can be arranged to a wall of the inner container 20. The inner container 20 can have for example, 2 to 10 slits. The slits can have for example, round or rectangular cross-section. Diameters of the slits can be 1 mm to 50 mm. The slits can be arranged in an inclined angle to the wall. So, a first end of the slit on an outer surface of the wall can be at a higher point than a second end of the slit on an inner surface of the wall. This ensures that water cannot come out the inner container, but the airflow can go inside the inner container.

The at least one perforation 24, 25 for removing an excess of the irrigation liquid from the inner container 20 can be arranged to the wall of the inner container 20. Preferably, the inner container 20 comprises at least two perforations 24, 25. The perforations can be arranged to the opposite sides of the inner container 20 in the height direction of the inner container 20. The perforations can have for example, round or rectangular cross-section. Diameters of the perforations can be 1 to 50 mm.

The irrigation system can comprise a pump 40. The pump 40 can be placed in the lower portion 12 of the outer container 10, which is configured to receive the irrigation liquid 42. The pump 40 itself may also be arranged outside the apparatus, and be connected to the apparatus to allow movement of the irrigation liquid.

The pump 40 can comprise a timer, which is configured to set on and off the pump 40. Thus, the pump can be on automatically only at the preferred times.

The pump 40 or some other part of the irrigation system may also comprise detection means to detect the level of the irrigation liquid in the lower portion 12 of the outer container 10, whereby the functioning of the irrigation system may be controlled by this detection means.

The conduit 41 for transferring irrigation liquid 42 can be for example, a pipe or a hose. The conduit 41 is coupled with the pump and hence has its lower end at the lower portion 12 of the outer container 10, while its upper end is arranged above the perforations 24, 25, preferably above the slits 22, 23 and the plant. An inner diameter of the conduit 41 can be for example, 2 to 20 mm.

The excess irrigation liquid can be transferred from the upper portion 11 to the lower portion 12 by the air space 13 between the outer container 10 and the inner container 20.

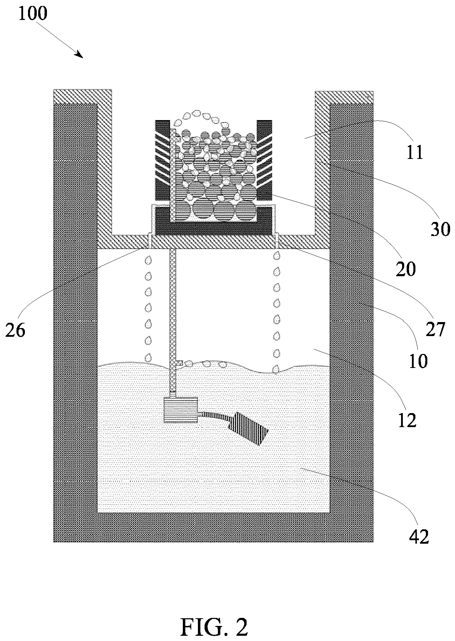

FIGURE 2 illustrates that the apparatus 100 can further comprise a bottom structure 30 between the upper portion 11 and the lower portion 12. The bottom structure 30 can be arranged in a width direction of the apparatus inside the outer container 10. The bottom structure 30 can be connected to an inner surface of the walls of the outer container 10. The bottom structure 30 can extend along the walls of the outer container 10 in a height direction of the apparatus 100 to the opening of the outer container 10.

The inner container 20 can be placed on the bottom structure 30. Thus, it remains in a desired position relative to the outer container 10. The bottom structure 30 may for example comprise means for securing the inner container into place, such as pins which fit into holes at the bottom of the inner container.

The bottom structure 30 can have at least one aperture 26, 27 for removing an excess of the irrigation liquid from the inner container 20. Then, the excess irrigation water flowing from the inner container 20 does not stay on the bottom structure 30, but flows through the bottom structure 30 to the lower portion 12 of the outer container 10. This allows re-circulating the irrigation liquid within the apparatus.

The bottom structure 30, and if needed also the inner container 20, can be removed from the outer container 10 for example, for adding the nutrient liquid 42, water or nutrition to the lower portion 12 of the outer container 10, or for cleaning the outer container 10.

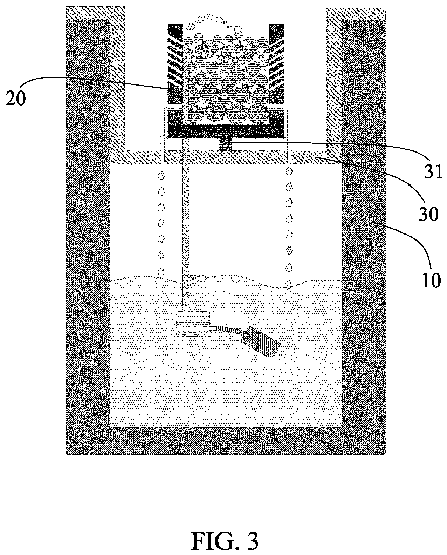

FIGURE 3 illustrates that the inner container 20 can have a stand 31, which is used to place the inner container in a desired position relative to the outer container 10. The stand 31 can be attached to the bottom structure 30. The stand provides forming of an air space between a bottom of the inner container and the bottom structure. Thus, air can also flow under the inner container. Alternatively, the stand 31 can be connected to for example, an inner surface of an bottom of the outer container 10 or an inner surface of a wall of the outer container 10, and an outer surface of an bottom of the inner container 20. The stand provides airflow also under the inner container 20.

Alternatively, the inner container 20 can be hung to hang inside the outer container 10. Then no bottom structure is needed.

According to an embodiment, the at least one perforation 24, 25 of the inner container 20 and the irrigation system are configured to maintain a level of irrigation liquid constant in the inner container 20. The at least one perforation 24, 25 can be arranged to a height that keeps a preferred irrigation liquid level in the inner container 20. A flow rate of the irrigation liquid can be set to keep the preferred irrigation liquid level despite the amount of fluid needed for growth of the plant and the amount of the irrigation liquid vaporizing during the use of the apparatus. Thus, the at least one perforation 24, 25 of the inner container 20 and the irrigation system maintains an irrigation liquid reservoir in the inner container. Thanks to this, there is always enough irrigation liquid in the inner container and the plants cannot suffer from a lack of the irrigation liquid.

According to an embodiment, the irrigation system is configured to spread the irrigation liquid to the inner container 20. For example, the conduit 41 can extend from the pump 40 to the inner container 20. The conduit 41 can have at least one, preferably a plurality, of openings or branches through which the irrigation liquid can flow to the inner container. Thus, the irrigation liquid can be guided to at least one spot, preferably to plurality of spots, for spearing the irrigation liquid in the inner container 20. This enables even watering of the plant.

According to an embodiment, the irrigation system is configured to control the temperature of the inner container 20 by increasing or decreasing irrigation liquid flow to the inner container 20. Thus, the temperature of the inner container 20 can be increased by lowering the irrigation liquid flow or decreased by increasing the irrigation liquid flow. This enables the temperature to be adjusted to suit the needs of the plant, which in turn increases the growth rate of the plant.

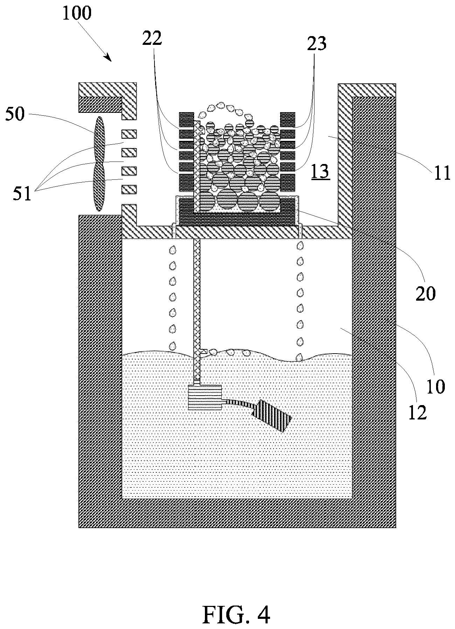

FIGURE 4 illustrates a hydroponic apparatus 100 comprising means 50 for creating airflow through the inner container through the inner container 20 through the plurality of slits 22, 23 and through the air space 13 in accordance with at least some embodiments. The means of creating airflow enables providing fresh air to the plant.

According to an embodiment, the means 50, 52 for creating an airflow is configured to control the temperature of the inner container 20 by increasing or decreasing airflow to the inner container 20. Thus, the temperature of the inner container 20 can be increased by lowering the airflow or decreased by increasing the airflow. This enables the temperature to be adjusted to suit the needs of the plant, which in turn increases the growth rate of the plant.

According to an embodiment, the means 50 for creating an airflow is a fan. The fan is simple and cost effective option for creating an airflow. Further, it does not require a lot of space, thus it can be easily arranged into the apparatus.

FIGURE 4 illustrates that the fan is arranged in a wall of the upper portion 11 of the outer container 10. The wall comprises a space for receiving the fan. Thus, the fan and the apparatus form a single unit.

However, more than one fan, such as two fans, can be arranged in the wall of the upper portion 11 of the outer container 10. Thus, the wall can comprise as many spaces for receiving the fan as there are fans.

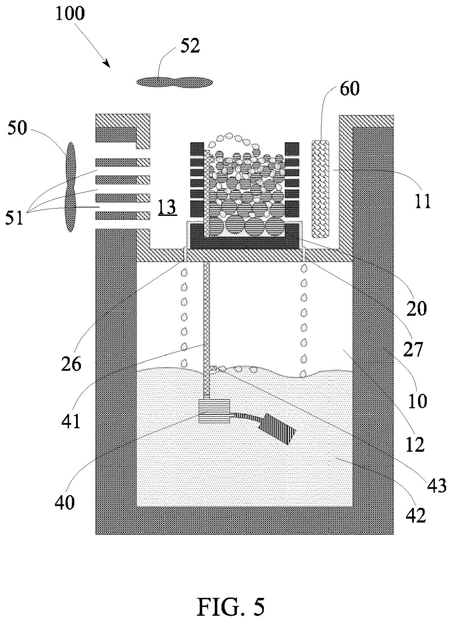

FIGURE 5 illustrates that the means 50, 52 for creating an airflow, such as a fan, is arranged outside the outer container 10. The means 50, 52 for creating an airflow can be arranged at the side of the apparatus and/or above the apparatus. Thus, the means 50, 52 for creating an airflow does not take up space on the wall.

FIGURES 4 and 5 illustrate that the wall of the upper portion 11 of the outer container 10 comprises a plurality of slits 51 for guiding the airflow from the outside of the apparatus 100 to the inside of the upper portion 11 of the outer container 10. The wall of the upper portion 11 of the outer container 10 can comprise for example, 3 to 10 slits. The slits can be horizontal. The slits 51 extend through the wall. The slits enables guiding of the airflow towards the inner container.

According to an embodiment, the irrigation system is configured to mix air with the irrigation liquid 42 to increase dissolved oxygen level in the irrigation liquid 42. This provides better growth conditions for the plant and thus increases the growth rate of the plant.

FIGURE 5 illustrates that the conduit 41 can have an opening 43. The opening can be formed at the higher level than a level of the irrigation liquid surface 42. Thus, part of the irrigation liquid pumped by the pump 40 can be returned to the lower portion 12 of the outer container. During this procedure, the irrigation liquid is oxidized.

Further, when the excess irrigation liquid is drained from the upper portion 11 to the lower portion 12 through at least one aperture 26, 27 between the upper portion 11 and the lower portion 12, the irrigation liquid is oxidized.

Furthermore, the means 50 for creating airflow can be configured to create airflow through at least one aperture 26, 27 between the upper portion 11 and the lower portion 12. Thus, oxygen content of the irrigation liquid in the lower portion 12 can be increased.

FIGURE 5 illustrates that the apparatus 100 further comprises a cooling means 60 in the air space 13 for cooling the apparatus 100. Thus, the temperature of the inner container 20 can be decreased by the cooling means. This enables the temperature to be adjusted to suit the needs of the plant, which in turn increases the growth rate of the plant.

The cooling means 50 can be a cold media, such as ice or an ice pack. The cold media can be placed in the air space 13 when cooling is needed and removed from the airspace when the preferred temperature is reached. The cold media is a simple and cost effective option for cooling. Further, it does not require a lot of space, thus it fits easily into the air space.

The cooling means 60 can be insulated. This ensures that the irrigation liquid does not dilute when ice turns into water and flow to the lower portion of the outer container.

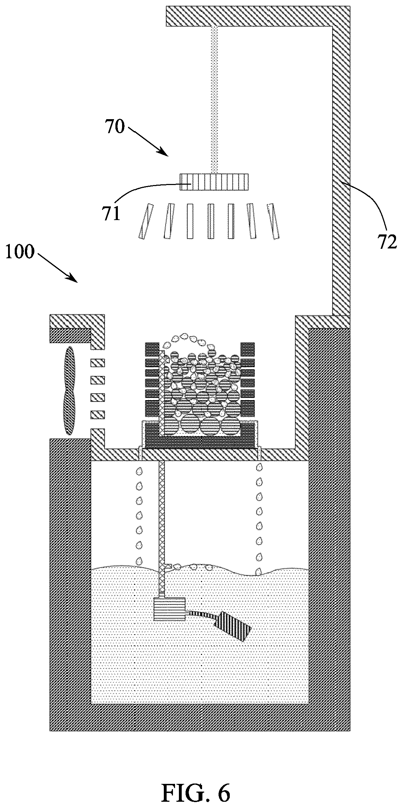

FIGURE 6 illustrates that the apparatus further comprises a lighting means 70 for lighting the plant. The lighting means ensures that the plant gets enough light, even when natural light is not available.

The lighting means 70 can comprise a timer, which is configured to set on and off the lighting means. Thus, the lighting means can be on automatically only at the preferred times, such as during evenings or winter time when there is no natural light available.

The lighting means 70 is preferably configured to illuminate the plant from above. This enables even illumination of the plant.

However, the lighting means 70 can be configured to illuminate the plant from a side. For example, the apparatus 100 can have one illumination means 70 at a first side of the apparatus 100 and the other illumination means 70 at a second side of the apparatus 100 in a height direction of the apparatus 100.

FIGURE 6 illustrates that the lighting means 70 comprises a stand 72 having a lower end and an upper end. The lower end is connected to the apparatus 100 and the upper end comprises a lamp 71. Thus, the apparatus 100 and the lighting means 70 form a single unit.

The lamp 71 can be a light-emitting diode (LED) lamp. The LED lamp heats up only slightly. Thus, the LED lamp does not have markedly effect on to the growing temperature and the growing temperature can be kept low.

The hydroponic apparatus 100 is used for growing plants. Especially the apparatus 100 is used for growing wasabi japonica. Wasabi japonica is known to be very difficult, even impossible, to grow especially indoors. It is demanding about its growing conditions, such as temperature, oxygen content of the irrigation liquid and amount of light. With the apparatus described above, preferred growing conditions for wasabi japonica can be obtained in a reliable manner.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "an embodiment" means that a particular feature, structure, or characteristic described in connection with the embodiment is included in at least one embodiment of the present invention. Thus, appearances of the phrase "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS' LIST

- 10: outer container
- 11: upper portion
- 12: lower portion
- 13: airspace
- 20: inner container
- 21: support media
- 22, 23: slit
- 24, 25: perforation
- 26, 27: aperture
- 30: bottom structure
- 31: stand
- 40: pump
- 41: conduit
- 42: irrigation liquid
- 43: opening
- 50, 52: means for creating airflow
- 51: slit
- 60: cooling means
- 70: lighting means
- 71: light
- 72: stand
- 100: apparatus

## Claims

1. A hydroponic apparatus (100) comprising:
- an outer container (10) comprising an upper portion (11) and a lower portion (12) in a height direction of the apparatus (100), which lower portion (12) is configured to receive an irrigation liquid (42),
- an inner container (20) in the upper portion (11) of the outer container (10) for receiving a plant and the irrigation liquid (42), which inner container (20) has a solid base comprises:
- a plurality of slits (22, 23) for air ventilation, and
- at least one perforation (24, 25) for removing an excess of the irrigation liquid from the inner container (20),
which inner container (20) has a smaller outer diameter than an inner diameter of the outer container (10) thus forming an air space (13) between the outer container (10) and the inner container (20),
- an irrigation system for irrigating the plant with the irrigation liquid (42), which irrigation system comprises a conduit (41) for transferring irrigation liquid (42) to the inner container (20), and
- at least one aperture (26, 27) between the upper portion (11) and the lower portion (12) for transferring excess irrigation liquid from the upper portion (11) to the lower portion (12).

2. The hydroponic apparatus (100) of claim 1, wherein the inner container (20) comprises an upwardly facing opening for the plant.

3. The hydroponic apparatus (100) of any one of the preceding claims, further comprising a bottom structure (30) between the upper portion (11) and the lower portion (12).

4. The hydroponic apparatus (100) of any one of the preceding claims, wherein the at least one perforation (24, 25) of the inner container (20) and the irrigation system are configured to maintain a level of irrigation liquid constant in the inner container (20).

5. The hydroponic apparatus (100) of any one of the preceding claims, wherein the irrigation system is configured to spread the irrigation liquid to the inner container (20).

6. The hydroponic apparatus (100) of any one of the preceding claims, wherein the irrigation system is configured to control the temperature of the inner container (20) by increasing or decreasing irrigation liquid flow to the inner container (20).

7. The hydroponic apparatus (100) of any one of the preceding claims, wherein the apparatus comprises means (50, 52) for creating an airflow through the inner container (20) through the plurality of slits (22, 23) and through the air space (13).

8. The hydroponic apparatus (100) of claim 7, wherein the means (50, 52) for creating an airflow is configured to control the temperature of the inner container (20) by increasing or decreasing airflow to the inner container (20).

9. The hydroponic apparatus (100) of claim 7 or 8, wherein the means (50, 52) for creating an airflow is a fan arranged in a wall of the upper portion (11) of the outer container (10) or outside the outer container (10).

10. The hydroponic apparatus (100) of claim 9, wherein the wall of the upper portion (11) of the outer container (10) comprises a plurality of slits (51) for guiding the airflow from the outside of the apparatus (100) to the inside of the upper portion (11) of the outer container (10).

11. The hydroponic apparatus (100) of any one of the preceding claims, wherein the irrigation system is configured to mix air with the irrigation liquid (42) to increase dissolved oxygen level in the irrigation liquid (42).

12. The hydroponic apparatus (100) of any one of the preceding claims, further comprising a cooling means (60) in the air space (13) for cooling the apparatus (100).

13. The hydroponic apparatus (100) of claim 12, wherein the cooling means (60) is a cold media, such as an ice pack.

14. The hydroponic apparatus (100) of any one of the preceding claims, further comprising a lighting means (70) for lighting the plant.

15. Use of the hydroponic apparatus (100) for growing plants, especially wasabi japonica.
